(19)

Europäisches
Patentamt

European
Patent Office

Office européen
des brevets

(11) **EP 4 525 093 A1**

(12) **EUROPEAN PATENT APPLICATION**
published in accordance with Art. 153(4) EPC

(43) Date of publication:
**19.03.2025 Bulletin 2025/12**

(21) Application number: **23815551.9**

(22) Date of filing: **29.03.2023**

(51) International Patent Classification (IPC):
**H01M 4/62** $^{(2006.01)}$    **H01M 4/02** $^{(2006.01)}$
**H01M 4/04** $^{(2006.01)}$    **H01M 4/13** $^{(2010.01)}$
**H01M 4/139** $^{(2010.01)}$

(52) Cooperative Patent Classification (CPC):
**H01M 4/02; H01M 4/04; H01M 4/13; H01M 4/139;
H01M 4/62;** Y02E 60/10

(86) International application number:
**PCT/JP2023/012966**

(87) International publication number:
**WO 2023/233789 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.05.2022 JP 2022087653**

(71) Applicant: **Denka Company Limited
Tokyo 103-8338 (JP)**

(72) Inventors:
• **HIDAKA, Masatomo**
**Tokyo 103-8338 (JP)**
• **NAGAI, Tatsuya**
**Tokyo 103-8338 (JP)**
• **HARADA, Yusaku**
**Tokyo 103-8338 (JP)**
• **ITO, Tetsuya**
**Tokyo 103-8338 (JP)**

(74) Representative: **Hoffmann Eitle
Patent- und Rechtsanwälte PartmbB
Arabellastraße 30
81925 München (DE)**

(54) **POSITIVE ELECTRODE COMPOSITION, POSITIVE ELECTRODE, BATTERY, METHOD FOR
MANUFACTURING POSITIVE-ELECTRODE-FORMING COATING LIQUID, METHOD FOR
MANUFACTURING POSITIVE ELECTRODE, AND METHOD FOR MANUFACTURING BATTERY**

(57)    A positive electrode composition contains carbon black, a carbon nanotube, a binding material, and an active material. The carbon black has a hydrochloric acid liquid absorption amount of 30 mL/5 g or more. The carbon nanotube has an average diameter of 5 to 15 nm.

**EP 4 525 093 A1**

## Description

### Technical Field

The present invention relates to a positive electrode composition, a positive electrode, a battery, a method for producing positive electrode-forming coating liquid, a method for producing a positive electrode, and a method for producing a battery

### Background Art

Due to the increase in environmental and energy problems, technology for realizing a low-carbon society that reduces the degree of dependence on fossil fuels has been actively developed. Such technical development includes the development of low-pollution vehicles such as hybrid electric vehicles and electric vehicles, the development of natural energy power generation and storage systems such as solar power generation and wind power generation, the development of a next-generation power transmission network that efficiently supplies power and reduces power transmission loss, and the like.

One of the key devices required in common for these techniques is a battery, and such a battery is required to have a high energy density for reducing the size of the system. In addition, high output characteristics for enabling stable power supply regardless of the use environment temperature are required. Furthermore, good cycle characteristics and the like that can withstand long-term use are also required. Therefore, replacement of conventional lead-acid batteries, nickel-cadmium batteries, and nickel-hydrogen batteries with lithium ion secondary batteries having higher energy density, output characteristics, and cycle characteristics is rapidly progressing.

Conventionally, a positive electrode of a lithium ion secondary battery is manufactured by applying a positive electrode paste containing a positive electrode active material, a conductive material, and a binding material (also referred to as a binder) to a current collector. As the positive electrode active material, lithium-containing composite oxides such as lithium cobaltate and lithium manganate have been used. In addition, since a positive electrode active material is poor in conductivity, a conductive material such as carbon black has been added to a positive electrode paste for the purpose of imparting conductivity (for example, Patent Literature 1).

### Citation List

### Patent Literature

Patent Literature 1: Japanese Unexamined Patent Publication No. 2008-227481

### Summary of Invention

### Technical Problem

In recent years, further improvement in performance in batteries such as lithium ion secondary batteries has been required.

An object of the present invention is to provide a positive electrode composition capable of realizing a battery having low internal resistance and excellent discharge rate characteristics and cycle characteristics. Another object of the present invention is to provide a method for producing a positive electrode-forming coating liquid capable of realizing a battery having low internal resistance and excellent discharge rate characteristics and cycle characteristics. Another object of the present invention is to provide a positive electrode capable of realizing a battery having low internal resistance and excellent discharge rate characteristics and cycle characteristics, and a method for producing the positive electrode. Further, an object of the present invention is to provide a battery including the positive electrode and a method for producing the same.

### Solution to Problem

The present invention relates to, for example, the following <1> ~ <7>.

<1> A positive electrode composition containing: carbon black; a carbon nanotube; a binding material; and an active material, in which

the carbon black has a hydrochloric acid liquid absorption amount of 30 mL/5 g or more, and

the carbon nanotube has an average diameter of 5 to 15 nm.

<2> The positive electrode composition according to <1>, in which a ratio of the average diameter to a BET specific surface area of the carbon nanotube (average diameter/BET specific surface area) is 0.01~0.1 nm/(m$^2$/g).

<3> A positive electrode including: a mixture layer formed of the positive electrode composition according to <1> or <2>.

<4> A battery including: the positive electrode according to <3>.

<5> The method for producing a positive electrode-forming coating liquid, the method including:

a mixing step of mixing carbon black and a first liquid medium to obtain a first agent containing the carbon black and the first liquid medium; and

a coating liquid forming step of mixing the first agent, a second agent containing a carbon nanotube and a second liquid medium, a third agent containing a binding material and a third liquid medium, and an active material to form a positive electrode-forming coating liquid, in which

the carbon black has a hydrochloric acid liquid absorption amount of 30 mL/5 g or more, and

the carbon nanotube has an average diameter of 5 to 15 nm.

<6> A method for producing a positive electrode, the method including: a positive electrode forming step of applying a positive electrode-forming coating liquid produced by the method according to <5> onto a current collector to form a mixture layer composed of a positive electrode composition containing the carbon black, the carbon nanotube, the binding material and the active material on the current collector, thereby obtaining a positive electrode including the current collector and the mixture layer.

<7> A method for producing a battery, the method including: a positive electrode forming step of applying a positive electrode-forming coating liquid produced by the method according to <5> onto a current collector to form a mixture layer composed of a positive electrode composition containing the carbon black, the carbon nanotube, the binding material and the active material on the current collector, thereby obtaining a positive electrode including the current collector and the mixture layer.

**Advantageous Effects of Invention**

According to the present invention, there is provided a positive electrode composition capable of realizing a battery having low internal resistance and excellent discharge rate characteristics and cycle characteristics. Further, according to the present invention, there is provided a method for producing a positive electrode-forming coating liquid capable of realizing a battery having low internal resistance and excellent discharge rate characteristics and cycle characteristics. In addition, according to the present invention, there are provided a positive electrode capable of realizing a battery having low internal resistance and excellent discharge rate characteristics and cycle characteristics, and a method for producing the positive electrode. Furthermore, according to the present invention, a battery including the positive electrode and a method for producing the same are provided.

**Description of Embodiments**

Hereinafter, preferred embodiments of the present invention will be described in detail. In the present specification, carbon black may be abbreviated as "CB", and carbon nanotube may be abbreviated as "CNT". Furthermore, in the present specification, the tilde symbol "~" is a symbol used to indicate a numerical range including numerical values described before and after the tilde symbol. Specifically, the description (both X and Y are numerical values) of "X~Y" indicates "X or more and Y or less".

<Carbon Black>

The carbon black of the present embodiment has a hydrochloric acid liquid absorption amount of 30 mL/5 g or more.

The hydrochloric acid liquid absorption amount is the amount of hydrochloric acid that can be retained on the particle surface of carbon black or in voids formed by the structure and the agglomerate (secondary aggregation of the structure), and is an index for evaluating the degree of development of the structure and the agglomerate. Here, the carbon black structure is a structure in which primary particles are linked (that is, primary aggregates). The structure of carbon black develops in a complicatedly entangled shape as the particle diameter of primary particles is reduced.

The hydrochloric acid liquid absorption amount can be measured according to JIS K1469:2003. Specifically, the content of hydrochloric acid is obtained by adding hydrochloric acid little by little to 5 g of carbon black put in an Erlenmeyer flask, shaking the mixture, and measuring the amount of hydrochloric acid required until the mixture becomes one nodule.

In carbon black, the degree of development of structures and agglomerates greatly varies depending on a thermal history (for example, thermal history caused by thermal decomposition and combustion reaction of fuel oil, thermal decomposition and combustion reaction of raw material, rapid cooling by cooling medium, reaction stop, and the like) at the time of synthesis, a difference in collision frequency of temporary particles, and the like. In a case where carbon black is used as a conductive agent, the structure of carbon black affects conductivity and slurry viscosity. When the structure is developed, a conductive path in the electrode can be efficiently formed, but when the dispersion state is poor, the effect cannot be sufficiently exhibited.

The carbon black of the present embodiment has a hydrochloric acid liquid absorption amount of 30 mL/5 g or more, and has a structure in which structures and agglomerates are sufficiently developed. Therefore, according to the carbon black of the present embodiment, a conductive path in the electrode can be efficiently formed.

The hydrochloric acid liquid absorption amount of the carbon black of the present embodiment may be 31 mL/5 g or more, 32 mL/5 g or more, 33 mL/5 g or more, 34 mL/5 g or more, 35 mL/5 g or more, 36 mL/5 g or more, or 37 mL/5 g or more from the viewpoint of more remarkably obtaining the above effect.

In the carbon black of the present embodiment, when the hydrochloric acid liquid absorption amount is significantly large, the slurry viscosity may increase due to excessive development of the structure. From the viewpoint of easily keeping the viscosity of the first agent described later within a suitable range, the hydrochloric acid liquid absorption amount may be, for example, 60 mL/5 g or less, 55 mL/5 g or less, or 50 mL/5 g or less.

That is, the hydrochloric acid liquid absorption amount of the carbon black of the present embodiment may be, for example, 30~60 mL/5 g, 30~55 mL/5 g, 30~50 mL/5 g, 31~60 mL/5 g, 31~55 mL/5 g, 31~50 mL/5 g, 32~60 mL/5 g, 32~55 mL/5 g, 32~50 mL/5 g, 33~60 mL/5 g, 33~55 mL/5 g, 33~50 mL/5 g, 34~60 mL/5 g, 34~55 mL/5 g, 34~50 mL/5 g, 35~60 mL/5 g, 35~55 mL/5 g, 35~50 mL/5 g, 36~60 mL/5 g, 36~55 mL/5 g, 36~50 mL/5 g, 37~60 mL/5 g, 37~55 mL/5 g or 37~50 mL/5 g.

The specific surface area of the carbon black of the present embodiment may be, for example, 130 $m^2$/g or more. The specific surface area of the carbon black is preferably 140 $m^2$/g or more, more preferably 150 $m^2$/g or more, and still more preferably 160 $m^2$/g or more from the viewpoint of further improving the conductivity imparting ability. The specific surface area of carbon black can be increased by reducing the particle diameter of primary particles, making the particle hollow, making the particle surface porous, and the like.

The specific surface area of the carbon black of the present embodiment may be, for example, 500 $m^2$/g or less. The specific surface area of the carbon black is preferably 450 $m^2$/g or less, and more preferably 400 $m^2$/g or less from the viewpoint of further improving the dispersibility.

That is, the specific surface area of the carbon black of the present embodiment may be, for example, 130~500 $m^2$/g, 130~450 $m^2$/g, 130~400 $m^2$/g, 140~500 $m^2$/g, 140~450 $m^2$/g, 140~400 $m^2$/g, 150~500 $m^2$/g, 150~450 $m^2$/g, 150~400 $m^2$/g, 160~500 $m^2$/g, 160~450 $m^2$/g, or 160~400 $m^2$/g

In the present specification, the specific surface area is measured according to Method A flow method (thermal conductivity measurement method) of JIS K6217-2:2017.

The DBP absorption amount of the carbon black of the present embodiment may be, for example, 150 mL/100 g or more, preferably 160 mL/100 g or more, and more preferably 165 mL/100 g or more. The DBP absorption amount of the carbon black of the present embodiment is, for example, 300 mL/100 g or less, more preferably 285 mL/100 g or less.

That is, the DBP absorption amount of the carbon black of the present embodiment may be, for example, 150~300 mL/100 g, 150~285 mL/100 g, 160~300 mL/100 g, 160~285 mL/100 g, 165~300 mL/100 g, or 165~285 mL/100 g.

The DBP absorption amount is an index for evaluating the ability of absorbing dibutyl phthalate (DBP) on the particle surface of carbon black and in voids formed by primary aggregates. In carbon black in which primary aggregates are developed, a neck portion formed by fusion of primary particles and voids formed between particles increase, so that the DBP absorption amount increases. When the DBP absorption amount is large, the conductivity imparting ability in the electrode tends to increase due to the development of primary aggregates, and also tends to easily follow the volume change of the active material associated with charging and discharging of the battery, and the battery characteristics such as cycle characteristics tend to be further improved. In addition, when the DBP absorption amount is small, the binder in the mixture layer is prevented from being trapped in the primary aggregate of carbon black, and good adhesion to the active material and the current collector tends to be easily maintained.

In the present specification, the DBP absorption amount indicates a value obtained by converting a value measured by a method described in Method B of JIS K6221 into a value corresponding to JIS K6217-4:2008 according to the following Formula (a).

$$\text{DBP absorption amount} = (A - 10.974)/0.7833 \quad ... \quad (a)$$

[In the formula, A represents a value of a DBP absorption amount measured by a method described in Method B of JIS K6221.]

The average primary particle size of the carbon black of the present embodiment may be, for example, less than 35 nm, preferably less than 30 nm, and more preferably less than 25 nm. The average primary particle size of the carbon black of the present embodiment may be, for example, 1 nm or more.

Conventionally, it has been difficult for carbon black used for a conductive agent of a lithium ion secondary battery to be formed into a slurry when the average primary particle size is small (for example, less than 30 nm), but the carbon black of the present embodiment can easily form a slurry having a low viscosity even in a case where the average primary particle size is small (for example, less than 30 nm). When carbon black having a small particle diameter can be used as described above, high conductivity can be exhibited even if the blending ratio in the mixture layer is low.

The average primary particle size of carbon black can be determined by measuring the primary particle sizes of 100 or more carbon blacks randomly selected from a 50,000-times magnification image of a transmission electron microscope (TEM), and calculating an average value. The primary particles of carbon black have a small aspect ratio and a shape close to a perfect sphere, but are not perfect spheres. Therefore, in the present embodiment, the maximum line segment connecting two points on the outer periphery of the primary particle in the TEM image is defined as the primary particle size of carbon black.

The ash content of the carbon black of the present embodiment may be, for example, 0.05 mass% or less, preferably 0.03 mass% or less, and more preferably 0.02 mass% or less. The ash content can be measured according to JIS K1469:2003, and can be reduced, for example, by classifying carbon black with an apparatus such as a dry cyclone.

The content of iron in the carbon black of the present embodiment may be, for example, less than 2500 ppb by mass, preferably less than 2300 ppb by mass, and more preferably less than 2000 ppb by mass. The content of iron can be reduced, for example, by bringing carbon black into contact with a magnet.

The content of iron in the carbon black is pretreated by an acidolysis method according to JIS K0116:2014, and can be measured by high-frequency inductively coupled plasma mass spectrometry. Specifically, it can be measured by the following method. First, 1 g of carbon black is precisely weighed in a quartz beaker and heated at 800°C for 3 hours by an electric furnace in the air atmosphere. Next, 10 mL of a mixed acid (hydrochloric acid 70 mass%, nitric acid 30 mass%) and 10 mL or more of ultrapure water are added to the residue, and the mixture is heated and dissolved on a hot plate at 200°C for 1 hour. After the cooling, the solution diluted and adjusted to 25 mL with ultrapure water is measured with a high-frequency inductively coupled plasma mass spectrometer (Agilent 8800 manufactured by Agilent).

When the content of ash and iron in the carbon black is small, it is possible to more remarkably suppress mixing of foreign matters such as metals and ceramics due to damage of devices and the like in the kneading treatment. In addition, it is also possible to suppress a decrease in conductivity in the electrode due to mixing of ash, insulating foreign matters, and the like. Therefore, carbon black having a small content of ash and iron can be suitably used for a lithium ion secondary battery requiring high safety.

The method for producing carbon black of the present embodiment is not particularly limited, and for example, a raw material such as hydrocarbon is supplied from a nozzle installed in an upstream part of the reaction furnace, carbon black is produced by a thermal decomposition reaction and/or a combustion reaction, and can be collected from a bag filter directly connected to the downstream part of the reaction furnace.

The raw material to be used is not particularly limited, and gaseous hydrocarbons such as acetylene, methane, ethane, propane, ethylene, propylene, and butadiene, and oily hydrocarbons such as toluene, benzene, xylene, gasoline, kerosene, light oil, and heavy oil can be used. Among them, acetylene having less impurities is preferably used. Since acetylene has higher heat of decomposition than other raw materials and can increase the temperature in the reaction furnace, nucleation of carbon black is dominant over particle growth by addition reaction, and the primary particle size of carbon black can be reduced.

In addition, it is preferable to supply oxygen, carbon dioxide, hydrogen, nitrogen, steam, and the like to the reaction furnace separately from the raw material serving as the carbon source. Gases other than these raw materials promote gas stirring in the reaction furnace and increase the frequency at which primary particles of carbon black produced from the raw materials collide with each other and are fused. Therefore, by using gases other than the raw materials, primary aggregates of carbon black tend to develop, and the hydrochloric acid liquid absorption amount and the DBP absorption amount tends to increase. As the gas other than the raw material, oxygen is preferably used. When oxygen is used, a part of the raw material is burned to increase the temperature in the reaction furnace, and carbon black having a small particle diameter and a high specific surface area is easily obtained. As the gas other than the raw material, a plurality of gases can also be used. The gas other than the raw material is preferably supplied to an upstream part of the reaction furnace, and is preferably supplied from a nozzle different from the raw material. As a result, the raw material supplied from the upstream part is efficiently stirred, and primary aggregates are easily developed.

In the conventional carbon black production, a cooling medium such as water may be fed from the downstream part of the reaction furnace in order to stop the thermal decomposition and the combustion reaction of the raw material, but the effect of the development of the primary aggregates is not observed, and on the other hand, there is a possibility that the variation in characteristics may increase due to a rapid temperature change. Therefore, in the present embodiment, it is preferable not to feed the cooling medium from the downstream part of the reaction furnace.

The carbon black of the present embodiment is not limited to the carbon black directly obtained by the production in the reaction furnace as described above, and can also be obtained, for example, by pulverizing the obtained carbon black or mixing carbon blacks produced under different conditions.

<First Agent>

The first agent of the present embodiment is a mixture of the carbon black and a liquid medium. The first agent of the present embodiment can also be said to be a slurry containing carbon black and a liquid medium.

The first agent of the present embodiment may further contain a dispersant that assists the dispersion of the carbon black in the liquid medium. That is, the first agent of the present embodiment may be a mixture of the carbon black, the liquid medium, and the dispersant.

Examples of the liquid medium include water, N-methyl-2-pyrrolidone, cyclohexane, methyl ethyl ketone, and methyl isobutyl ketone. Among them, N-methyl-2-pyrrolidone is preferable from the viewpoint of dispersibility. N-methyl-2-pyrrolidone is sometimes abbreviated as "NMP".

The dispersant may be a component having a function of assisting dispersion of the conductive material (carbon black) in the liquid medium.

Examples of the dispersant include a polymer type dispersant and a low molecular type dispersant, and a polymer type dispersant is preferable from the viewpoint of long-term dispersion stability of the conductive material (carbon black).

The dispersant may be, for example, a dispersant selected from the group consisting of polyvinyl alcohol, polyvinyl pyrrolidone, polyvinyl butyral, carboxymethyl cellulose and salts thereof, polyvinyl acetal, polyvinyl acetate, polyvinyl amine, and polyvinyl formal.

The content of the dispersant in the first agent may be, for example, 1 part by mass or more with respect to 100 parts by mass of the carbon black, and from the viewpoint of enhancing the dispersibility of the carbon black, the content may be 2 parts by mass or more, 3 parts by mass or more, 4 parts by mass or more, or 5 parts by mass or more. The content of the dispersant in the first agent may be, for example, 50 parts by mass or less with respect to 100 parts by mass of the carbon black, and may be 45 parts by mass or less, 40 parts by mass or less, 35 parts by mass or less, 30 parts by mass or less, 25 parts by mass or less, or 20 parts by mass or less from the viewpoint of suppressing a decrease in conductivity due to an insulating dispersant.

That is, the content of the dispersant in the first agent may be, for example, 1~50 parts by mass, 1~45 parts by mass, 1~40 parts by mass, 1~35 parts by mass, 1~30 parts by mass, 1~25 parts by mass, 1~20 parts by mass, 2~50 parts by mass, 2~45 parts by mass, 2~40 parts by mass, 2~35 parts by mass, 2~30 parts by mass, 2~25 parts by mass, 2~20 parts by mass, 3~50 parts by mass, 3~45 parts by mass, 3~40 parts by mass, 3~35 parts by mass, 3~30 parts by mass, 3~25 parts by mass, 3~20 parts by mass, 4~50 parts by mass, 4~45 parts by mass, 4~40 parts by mass, 4~35 parts by mass, 4~30 parts by mass, 4~25 parts by mass, 4~20 parts by mass, 5~50 parts by mass, 5~45 parts by mass, 5~40 parts by mass, 5~35 parts by mass, 5~30 parts by mass, 5~25 parts by mass, or 5~20 parts by mass with respect to 100 parts by mass of carbon black.

The solid content concentration of the first agent is not particularly limited, and may be, for example, 1% by mass or more, 2% by mass or more, 3% by mass or more, 4% by mass or more, or 5% by mass or more. The solid content concentration of the first agent may be, for example, 25 mass% or less, 23 mass% or less, 20 mass% or less, 18 mass% or less, or 15 mass% or less.

That is, the solid content concentration of the first agent may be, for example, 1~25 mass%, 1~23 mass%, 1~20 mass%, 1~18 mass%, 1~15 mass%, 2~25 mass%, 2~23 mass%, 2~20 mass%, 2~18 mass%, 2~15 mass%, 3~25 mass%, 3~23 mass%, 3~20 mass%, 3~18 mass%, 3~15 mass%, 4~25 mass%, 4~23 mass%, 4~20 mass%, 4~18 mass%, 4~15 mass%, 5~25 mass%, 5~23 mass%, 5~20 mass%, 5~18 mass%, or 5~15 mass%.

If the viscosity of the first agent is too high, strong shearing is applied during kneading with the active material, so that primary aggregates of carbon black may be broken to deteriorate conductivity, or foreign matters may be mixed due to wear of the apparatus. On the other hand, if the viscosity of the first agent is too low, carbon black is likely to settle in the first agent, and it may be difficult to maintain uniformity. That is, it is considered that by lowering the viscosity of the first agent, destruction of the primary aggregates of carbon black is remarkably suppressed, and excellent conductivity imparting ability can be maintained, and contamination of foreign matters due to wear of equipment is remarkably suppressed.

From the above viewpoint, the viscosity (25°C, shear rate $10s^{-1}$) of the first agent may be, for example, 100 mPa·s or more, or 200 mPa·s or more. Further, from the above viewpoint, the viscosity (25°C, shear rate $10s^{-1}$) of the first agent may be, for example, 1500 mPa·s or less, or 1200 mPa·s or less.

That is, the viscosity (25°C, shear rate $10s^{-1}$) of the first agent may be, for example, 100~1500 mPa·s, 100~1200 mPa·s, 200~1500 mPa·s, or 200~1200 mPa·s.

<Carbon Nanotube>

The carbon nanotubes of the present embodiment have an average diameter of 5~15 nm.

When the average diameter of the carbon nanotubes is 5 nm or more, the interaction between the solvent and the conductive material and between the conductive materials is reduced, so that the carbon nanotubes are easily dispersed uniformly with respect to the active material, and therefore conductive paths are easily formed, so that excellent battery characteristics are more easily obtained. When the average diameter of the carbon nanotubes is 15 nm or less, the number of electrical contacts with the active material and the conductive material increases, the effect of imparting conductivity is improved, and excellent battery characteristics are more easily obtained.

The average diameter of carbon nanotubes means an average value of diameters measured on the basis of an image obtained by observing carbon nanotubes with a transmission electron microscope (TEM). Specifically, the average diameter is obtained by imaging ten carbon nanotubes at a magnification of 200,000 times using a transmission electron microscope JEM-2000FX (manufactured by JEOL Ltd.), measuring the diameters of hundred carbon nanotubes randomly extracted from the obtained image by image analysis, and arithmetically averaging the diameters.

The average diameter of the carbon nanotube may be 14 nm or less, 13 nm or less, 12 nm or less, 11 nm or less, 10 nm or less, 9 nm or less, 8 nm or less, or 7 nm or less from the viewpoint of further reducing the internal resistance and from the viewpoint of more excellent discharge rate characteristics and cycle characteristics.

That is, the average diameter of the carbon nanotubes may be, for example, 5~15 nm, 5~14 nm, 5~13 nm, 5~12 nm, 5~11 nm, 5~10 nm, 5~9 nm, 5~8 nm, or 5~7 nm.

The carbon nanotube preferably has a BET specific surface area of 170~320 $m^2/g$. When the BET specific surface area of the carbon nanotube is 170 $m^2/g$ or more, the number of electrical contacts with the active material and the conductive material is increased, and the effect of imparting conductivity is improved, so that excellent battery characteristics are more easily obtained. When the BET specific surface area of the carbon nanotube is 320 $m^2/g$ or less, the interaction between the solvent and the conductive material and between the conductive materials is reduced, so that the carbon nanotube is easily dispersed uniformly with respect to the active material, and therefore a conductive path is easily formed, so that excellent battery characteristics are more easily obtained.

The BET specific surface area of carbon nanotubes can be measured by a static capacity method in accordance with JIS Z8830 using nitrogen as an adsorbent.

The BET specific surface area of the carbon nanotube may be 180 $m^2/g$ or more, 190 $m^2/g$ or more, 200 $m^2/g$ or more, 210 $m^2/g$ or more, 220 $m^2/g$ or more, 230 $m^2/g$ or more, 240 $m^2/g$ or more, 250 $m^2/g$ or more, 260 $m^2/g$ or more, 270 $m^2/g$ or more, 280 $m^2/g$ or more, or 290 $m^2/g$ or more from the viewpoint of further reducing the internal resistance and from the viewpoint of more excellent discharge rate characteristics and cycle characteristics. The BET specific surface area of the carbon nanotube may be 310 $m^2/g$ or less from the viewpoint of further reducing the internal resistance and from the viewpoint of more excellent discharge rate characteristics and cycle characteristics.

That is, the BET specific surface area of the carbon nanotube may be, for example, 170~320 $m^2/g$, 180~320 $m^2/g$, 190~320 $m^2/g$, 200~320 $m^2/g$, 210~320 $m^2/g$, 220~320 $m^2/g$, 230~320 $m^2/g$, 240~320 $m^2/g$, 250~320 $m^2/g$, 260~320 $m^2/g$, 270~320 $m^2/g$, 280~320 $m^2/g$, 290~320 $m^2/g$, 170~310 $m^2/g$, 180~310 $m^2/g$, 190~310 $m^2/g$, 200~310 $m^2/g$, 210~310 $m^2/g$, 220~310 $m^2/g$, 230~310 $m^2/g$, 240~310 $m^2/g$, 250~310 $m^2/g$, 260~310 $m^2/g$, 270~310 $m^2/g$, 280~310 $m^2/g$, or 290~310 $m^2/g$.

The ratio of the average diameter to the BET specific surface area of carbon black of the carbon nanotube (average diameter/BET specific surface area) is preferably 0.01~0.1 nm/($m^2/g$). The ratio (average diameter/BET specific surface area) is a value obtained by dividing the average diameter of the carbon nanotube by the BET specific surface area of the carbon nanotube. When the ratio (average diameter/BET specific surface area) is 0.01 nm/($m^2/g$) or more, the entanglement between the carbon nanotubes is reduced, and the carbon nanotubes are easily dispersed uniformly in the active material, so that a conductive path is easily formed, and excellent battery characteristics are more easily obtained. When the ratio (average diameter/BET specific surface area) is 0.1 nm/($m^2/g$) or less, the number of carbon nanotubes per unit weight increases, and electricity can be efficiently supplied to the entire active material, so that excellent battery characteristics are obtained.

The ratio (average diameter/BET specific surface area) may be 0.09 nm/($m^2/g$) or less, 0.08 nm/($m^2/g$) or less, 0.07 nm/($m^2/g$) or less, 0.06 nm/($m^2/g$), 0.05 nm/($m^2/g$) or less, 0.04 nm/($m^2/g$) or less, or 0.03 nm/($m^2/g$) or less from the viewpoint of further reducing the internal resistance and from the viewpoint of more excellent discharge rate characteristics and cycle characteristics.

That is, the ratio (average diameter/BET specific surface area) may be, for example, 0.01~0.1 nm, 0.01~0.09 nm/($m^2/g$), 0.01~0.08 nm/($m^2/g$), 0.01~0.07 nm/($m^2/g$), 0.01~0.06 nm/($m^2/g$), 0.01~0.05 nm/($m^2/g$), 0.01~0.04 nm/($m^2/g$), or 0.01~0.03 nm/($m^2/g$).

The carbon nanotubes can be produced by a conventionally known method for producing carbon nanotubes. For example, a powdery catalyst in which iron is supported on magnesia (magnesium oxide) is present on the entire surface in the horizontal cross-sectional direction of a reactor in a vertical reactor, methane is circulated in the vertical direction in the reactor, methane and the catalyst are brought into contact with each other at 500~1200°C, and then the obtained product (unoxidized carbon nanotube) is subjected to an oxidation treatment, whereby the carbon nanotube can be produced. By the method for producing carbon nanotubes, carbon nanotubes composed of several layers of graphene layers and having an average diameter of 5~15 nm can be obtained.

The oxidation treatment of the product may be, for example, a firing treatment. The temperature of the firing treatment is not particularly limited, and may be, for example, 300~1000°C. Since the temperature of the firing treatment is affected by the atmosphere gas, it is preferable to perform the firing treatment at a relatively low temperature in a case where the oxygen concentration is high and at a relatively high temperature in a case where the oxygen concentration is low. Specifically, examples of the firing treatment of the product include a method in which the carbon nanotube is fired in the atmosphere at a combustion peak temperature of ±50°C before the oxidation treatment. In a case where the oxygen concentration is higher than the atmosphere, firing is performed in a temperature range lower than the firing peak temperature. In a case where the oxygen concentration is lower than the atmosphere, a temperature range higher than the firing peak temperature is selected. In particular, in a case where the firing treatment of carbon nanotubes before the oxidation treatment is performed in the atmosphere, it is preferable to perform the firing treatment in the range of the combustion peak temperature of ±15°C of carbon nanotubes before the oxidation treatment.

The oxidation treatment of the product may be a treatment with hydrogen peroxide, a mixed acid, a nitric acid, or the like. Examples of the method for treating the product with hydrogen peroxide include a method in which the product is mixed in 34.5% hydrogen peroxide water so as to be 0.01~10 mass% and reacted at a temperature of 0~100°C for 0.5~48 hours. Examples of the method for treating the above product with a mixed acid include a method in which the above product is mixed in a mixed solution of concentrated sulfuric acid and concentrated nitric acid (concentrated sulfuric acid: concentrated nitric acid = 3:1) so as to be 0.01~10 mass%, and reacted at a temperature of 0~100°C for 0.5~48 hours. The blending ratio of the mixed acid (concentrated sulfuric acid: concentrated nitric acid) can be adjusted within the range of 1:10~10:1 according to the amount of single-walled carbon nanotubes in the product. Examples of the method for treating the product with nitric acid include a method in which the product is mixed in nitric acid having a concentration of 40~80 mass% so as to be 0.01~10 mass% and reacted at a temperature of 60~150°C for 0.5~48 hours.

By subjecting the above product to an oxidation treatment, impurities such as amorphous carbon and single-walled carbon nanotubes having low heat resistance in the product can be selectively removed, and the purity of several layers of graphene layers, particularly 2~5 layers of carbon nanotubes can be improved. At the same time, by subjecting the product to an oxidation treatment, a functional group is added to the surface of the carbon nanotube, so that affinity with the liquid medium and the dispersant is improved, and dispersibility is improved. In the above-described oxidation treatment, a treatment using nitric acid is preferable.

The oxidation treatment may be performed immediately after the carbon nanotube before the oxidation treatment is obtained, or may be performed after another purification treatment. For example, in a case where iron/magnesia is used as the catalyst, the oxidation treatment may be performed after the purification treatment with an acid such as hydrochloric acid to remove the catalyst before the oxidation treatment, or the purification treatment may be performed for removing the catalyst after the oxidation treatment.

<Second Agent>

The second agent of the present embodiment is a mixture of the carbon nanotube and the liquid medium. The second agent of the present embodiment can also be said to be a slurry containing carbon nanotubes and a liquid medium.

The second agent of the present embodiment may further contain a dispersant that assists the dispersion of the carbon nanotubes in the liquid medium. That is, the second agent of the present embodiment may be a mixture of the carbon nanotube, the liquid medium, and the dispersant.

Examples of the liquid medium include water, N-methyl-2-pyrrolidone, cyclohexane, methyl ethyl ketone, and methyl isobutyl ketone. Among them, N-methyl-2-pyrrolidone is preferable from the viewpoint of dispersibility.

The dispersant may be a component having a function of assisting dispersion of the conductive material (carbon nanotube) in the liquid medium.

Examples of the dispersant include a polymer type dispersant and a low molecular type dispersant, and a polymer type dispersant is preferable from the viewpoint of long-term dispersion stability of the conductive material (carbon nanotube).

The dispersant may be, for example, a dispersant selected from the group consisting of polyvinyl alcohol, polyvinyl pyrrolidone, polyvinyl butyral, carboxymethyl cellulose and salts thereof, polyvinyl acetal, polyvinyl acetate, polyvinyl amine, and polyvinyl formal.

The content of the dispersant in the second agent may be, for example, 1 part by mass or more with respect to 100 parts by mass of the carbon nanotube, and may be 5 parts by mass or more, 10 parts by mass or more, 15 parts by mass or more, or 20 parts by mass or more from the viewpoint of enhancing the dispersibility of the carbon nanotube. In addition, the content of the dispersant in the second agent may be, for example, 50 parts by mass or less with respect to 100 parts by mass of carbon nanotubes, and may be 45 parts by mass or less or 40 parts by mass or less from the viewpoint of suppressing a decrease in conductivity due to an insulating dispersant.

That is, the content of the dispersant in the second agent may be, for example, 1~50 parts by mass, 1~45 parts by mass, 1~40 parts by mass, 5~50 parts by mass, 5~45 parts by mass, 5~40 parts by mass, 10~50 parts by mass, 10~45 parts by mass, 10~40 parts by mass, 15~50 parts by mass, 15~45 parts by mass, 15~40 parts by mass, 20~50 parts by mass, 20~45 parts by mass, or 20~40 parts by mass with respect to 100 parts by mass of the carbon nanotubes.

The solid content concentration of the second agent is not particularly limited, and may be, for example, 0.1 mass% or more, 1 mass% or more, 2 mass% or more, or 3 mass% or more. The solid content concentration of the second agent may be, for example, 10 mass% or less, 9 mass% or less, 8 mass% or less, or 7 mass% or less.

That is, the solid content concentration of the second agent may be, for example, 0.1~10 mass%, 0.1~9 mass%, 0.1~8 mass%, 0.1~7 mass%, 1~10 mass%, 1~9 mass%, 1~8 mass%, 1~7 mass%, 2~10 mass%, 2~9 mass%, 2~8 mass%, 2~7 mass%, 3~10 mass%, 3~9 mass%, 3~8 mass%, or 3~7 mass%.

If the viscosity of the second agent is too high, strong shearing is applied during kneading with the active material, so that primary aggregates of carbon black mixed together with the second agent may be broken to deteriorate conductivity, or foreign matters may be mixed due to wear of the apparatus. On the other hand, if the viscosity of the second agent is too low, carbon nanotubes are likely to settle in the second agent, and it may be difficult to maintain uniformity. That is, in the present embodiment, when the second agent has the following suitable viscosity, the above-described effect is more remarkably exhibited.

From the viewpoint of more remarkably obtaining the above effect, the viscosity (25°C, shear rate 10s$^{-1}$) of the second agent may be, for example, 10 mPa·s or more, and may be 50 mPa·s or more. From the viewpoint of more remarkably obtaining the above effect, the viscosity (25°C, shear rate 10s$^{-1}$) of the second agent may be, for example, 1000 mPa·s or less, or 500 mPa·s or less.

That is, the viscosity (25°C, shear rate 10s$^{-1}$) of the second agent may be, for example, 10~1000 mPa·s, 10~500 mPa·s, 50~1000 mPa·s, or 50~500 mPa·s.

<Third Agent>

The third agent contains a binding material and a liquid medium. The third agent can also be referred to as a mixture of the binding material and the liquid medium.

Examples of the binding material include polyvinylidene fluoride, polytetrafluoroethylene, a styrene-butadiene copolymer, and a (meth) acrylic acid ester copolymer. The structure of the polymer of the binding material may be, for example, a random copolymer, an alternating copolymer, a graft copolymer, a block copolymer, or the like. As the binding material, polyvinylidene fluoride is preferable from the viewpoint of excellent withstand voltage.

Examples of the liquid medium include water, N-methyl-2-pyrrolidone, cyclohexane, methyl ethyl ketone, and methyl isobutyl ketone. Among them, N-methyl-2-pyrrolidone is preferable from the viewpoint of dispersibility.

<Active Material>

The active material may be a material capable of reversibly occluding and releasing cations. The active material can also be referred to as a positive electrode active material.

The active material is not particularly limited, and for example, a known active material used for a lithium ion secondary battery can be used without particular limitation. Examples of the active material include lithium cobalt oxide, lithium nickel oxide, lithium manganese oxide, lithium nickel manganese cobalt oxide, and lithium iron phosphate.

The active material may be, for example, a lithium-containing composite oxide containing manganese having a volume resistivity of $1 \times 10^4$ $\Omega$·cm or more, or a lithium-containing polyanion compound. Examples of the lithium-containing composite oxide containing manganese include lithium manganate such as $LiMnO_2$, $LiMnO_3$, $LiNb_2O_3$, and $Li_{1+x}Mn_{2-x}O_4$ (where x = 0~0.33); and one or more kinds of transition metal elements such as $LiMn_xNi_yCo_zO_2$ (where x + y + z = 1, $0 \leq y < 1$, $0 \leq z < 1$, and $0 \leq x < 1$), $Li_{1+x}Mn_{2-x-y}M_yO_4$ (where x = 0~0.33, y = 0~1.0, and 2 - x - y > 0), $LiMn_{2-x}M_xO_2$ (where x = 0.01~0.1), and $Li_2Mn_3MO_8$. Examples of the lithium-containing polyanion compound include polyanion compounds such as $LiFePO_4$, $LiMnPO_4$, and $Li_2MPO_4F$ (where M is at least one metal selected from Co, Ni, Fe, Cr, and Zn). M in each composition formula is at least one selected from the group consisting of Fe, Co, Ni, Al, Cu, Mg, Cr, Zn, and Ta.

The average particle size ($D_{50}$) of the active material may be 20 $\mu$m or less or 10 $\mu$m or less from the viewpoint that the binding property between the conductive material and the binding material is sufficiently excellent, and a battery having more excellent cycle characteristics is easily obtained. The average particle size ($D_{50}$) of the active material can be measured by a laser light scattering method. The average particle size ($D_{50}$) of the active material may be, for example, 1 $\mu$m or more.

<Positive Electrode-Forming Coating Liquid>

The positive electrode-forming coating liquid of the present embodiment may be a coating liquid containing carbon black, carbon nanotubes, a binding material, an active material, and a liquid medium. The positive electrode-forming coating liquid may further contain a dispersant (dispersant for conductive material).

In the positive electrode-forming coating liquid of the present embodiment, examples of the carbon black, the carbon nanotube, the binding material, the active material, the dispersant, and the liquid medium can include the same ones as described above.

The positive electrode-forming coating liquid of the present embodiment may be produced, for example, by the following production method.

The method for producing a positive electrode-forming coating liquid of the present embodiment includes a mixing step of mixing the above-described carbon black and a first liquid medium to obtain the first agent containing the carbon black and the first liquid medium, and a coating liquid forming step of mixing the first agent, the second agent containing carbon nanotubes and a second liquid medium, a third agent containing a binding material and a third liquid medium, and an active material to form a positive electrode-forming coating liquid.

In the method for producing the positive electrode-forming coating liquid of the present embodiment, examples of the first agent, the second agent, the third agent, and the active material may include the same agents as described above.

In the mixing step, the method for mixing the carbon black and the first liquid medium is not particularly limited, and the mixing may be performed by a known method (for example, stirring and mixing with a ball mill, a Sandoz mill, a twin-screw kneader, a rotation-revolution type stirrer, a planetary mixer, a disperser mixer, or the like).

In the coating liquid forming step, a method for mixing the first agent, the second agent, the third agent, and the active material is not particularly limited, and the mixing may be performed by a known method (for example, stirring and mixing with a ball mill, a Sandoz mill, a twin-screw kneader, a rotation-revolution type stirrer, a planetary mixer, a disperser mixer, or the like). The first agent, the second agent, the third agent, and the active material may be mixed simultaneously or sequentially. For example, after mixing the first agent, the second agent, and the third agent, the active material may be mixed, the first agent and the third agent may be mixed, then the second agent may be mixed, and finally the active material may be mixed.

The content of the carbon black in the positive electrode-forming coating liquid may be, for example, 5 parts by mass or more with respect to 100 parts by mass of the total of the carbon black and the carbon nanotube, and may be 10 parts by mass or more, 15 parts by mass or more, 20 parts by mass or more, 25 parts by mass or more, 30 parts by mass or more, 35 parts by mass or more, 40 parts by mass or more, 45 parts by mass or more, 50 parts by mass or more, 55 parts by mass or more, 60 parts by mass or more, or 65 parts by mass or more from the viewpoint of further reducing the internal resistance and from the viewpoint of more excellent discharge rate characteristics and cycle characteristics. In addition, the content of the carbon black in the positive electrode-forming coating liquid may be, for example, 99 parts by mass or less with respect to 100 parts by mass of the total of the carbon black and the carbon nanotube, and may be 95 parts by mass or less, 90 parts by mass or less, 85 parts by mass or less, 80 parts by mass or less, or 75 parts by mass or less from the viewpoint of further reducing the internal resistance and from the viewpoint of more excellent discharge rate characteristics and cycle characteristics.

That is, the content of carbon black in the positive electrode-forming coating liquid may be, for example, 5~99 parts by mass, 5~95 parts by mass, 5~90 parts by mass, 5~85 parts by mass, 5~80 parts by mass, 5~75 parts by mass, 10~99 parts by mass, 10~95 parts by mass, 10~90 parts by mass, 10~85 parts by mass, 10~80 parts by mass, 10~75 parts by mass, 15~99 parts by mass, 15~95 parts by mass, 15~90 parts by mass, 15~85 parts by mass, 15~80 parts by mass, 15~75 parts by mass, 20~99 parts by mass, 20~95 parts by mass, 20~90 parts by mass, 20~85 parts by mass, 20~80 parts by mass, 20~75 parts by mass, 25~99 parts by mass, 25~95 parts by mass, 25~90 parts by mass, 25~85 parts by mass, 25~80 parts by mass, 25~75 parts by mass, 30~99 parts by mass, 30~95 parts by mass, 30~90 parts by mass, 30~85 parts by mass, 30~80 parts by mass, 30~75 parts by mass, 35~99 parts by mass, 35~95 parts by mass, 35~90 parts by mass, 35~85 parts by mass, 35~80 parts by mass, 35~75 parts by mass, 40~99 parts by mass, 40~95 parts by mass, 40~90 parts by mass, 40~85 parts by mass, 40~80 parts by mass, 40~75 parts by mass, 45~99 parts by mass, 45~95 parts by mass, 45~90 parts by mass, 45~85 parts by mass, 45~80 parts by mass, 45~75 parts by mass, 50~99 parts by mass, 50~95 parts by mass, 50~90 parts by mass, 50~85 parts by mass, 50~80 parts by mass, 50~75 parts by mass, 55~99 parts by mass, 55~95 parts by mass, 55~90 parts by mass, 55~85 parts by mass, 55~80 parts by mass, 55~75 parts by mass, 60~99 parts by mass, 60~95 parts by mass, 60~90 parts by mass, 60~85 parts by mass, 60~80 parts by mass, 60~75 parts by mass, 65~99 parts by mass, 65~95 parts by mass, 65~90 parts by mass, 65~85 parts by mass, 65~80 parts by mass, 65~75 parts by mass with respect to 100 parts by mass of the total of the carbon black and the carbon nanotube.

The content of the carbon nanotube in the positive electrode-forming coating liquid may be, for example, 1 part by mass or more with respect to 100 parts by mass of the total of the carbon black and the carbon nanotube, and may be 5 parts by mass or more, 10 parts by mass or more, 15 parts by mass or more, 20 parts by mass or more, or 25 parts by mass or more from the viewpoint of further reducing the internal resistance and from the viewpoint of more excellent discharge rate characteristics and cycle characteristics. The content of the carbon nanotube in the positive electrode-forming coating liquid may be, for example, 90 parts by mass or less, 85 parts by mass or less, 80 parts by mass or less, 75 parts by mass or less, 70 parts by mass or less, 65 parts by mass or less, 60 parts by mass or less, 55 parts by mass or less, 50 parts by mass or less, 45 parts by mass or less, 40 parts by mass or more, or 35 parts by mass or less with respect to 100 parts by mass in total of the carbon black and the carbon nanotube.

That is, the content of the carbon nanotube in the positive electrode-forming coating liquid may be, for example, 1~90 parts by mass, 1~85 parts by mass, 1~80 parts by mass, 1~75 parts by mass, 1~70 parts by mass, 1~65 parts by mass, 1~60 parts by mass, 1~55 parts by mass, 1~50 parts by mass, 1~45 parts by mass, 1~40 parts by mass, 1~35 parts by mass, 5~90 parts by mass, 5~85 parts by mass, 5~80 parts by mass, 5~75 parts by mass, 5~70 parts by mass, 5~65 parts by mass, 5~60 parts by mass, 5~55 parts by mass, 5~50 parts by mass, 5~45 parts by mass, 5~40 parts by mass, 5~35 parts by mass, 10~90 parts by mass, 10~85 parts by mass, 10~80 parts by mass, 10~75 parts by mass, 10~70 parts by mass, 10~65 parts by mass, 10~60 parts by mass, 10~55 parts by mass, 10~50 parts by mass, 10~45 parts by mass, 10~40 parts by mass, 10~35 parts by mass, 15~90 parts by mass, 15~85 parts by mass, 15~80 parts by mass, 15~75 parts by mass, 15~70 parts by mass, 15~65 parts by mass, 15~60 parts by mass, 15~55 parts by mass, 15~50 parts by mass, 15~45 parts by mass, 15~40 parts by mass, 15~35 parts by mass, 20~90 parts by mass, 20~85 parts by mass, 20~80 parts by mass, 20~75 parts by mass, 20~70 parts by mass, 20~65 parts by mass, 20~60 parts by mass, 20~55 parts by mass, 20~50 parts by mass, 20~45 parts by mass, 20~40 parts by mass, 20~35 parts by mass, 25~90 parts by mass, 25~85 parts by mass, 25~80 parts by mass, 25~75 parts by mass, 25~70 parts by mass, 25~65 parts by mass, 25~60 parts by mass, 25~55 parts by mass, 25~50 parts by mass, 25~45 parts by mass, 25~40 parts by mass, 25~35 parts by mass with respect to 100 parts by mass in total of the carbon black and the carbon nanotube.

The total content of the carbon nanotube and the carbon black in the positive electrode-forming coating liquid may be, for example, 0.1 mass% or more based on the total mass of the solid content in the positive electrode-forming coating liquid, and may be 0.3 mass% or more, 0.5 mass% or more, 0.7 mass% or more, or 0.9 mass% or more from the viewpoint of further reducing the internal resistance and from the viewpoint of more excellent discharge rate characteristics and cycle characteristics. In addition, the total content of the carbon nanotube and the carbon black in the positive electrode-forming coating liquid may be, for example, 5% by mass or less based on the total mass of the solid content in the positive electrode-forming coating liquid, and may be 4% by mass or less, 3% by mass or less, 2% by mass or less, or 1.5% by mass or less from the viewpoint of further reducing the internal resistance and from the viewpoint of more excellent discharge rate characteristics and cycle characteristics.

That is, the total content of the carbon nanotube and the carbon black in the positive electrode-forming coating liquid may be, for example, 0.1~5 mass%, 0.1~4 mass%, 0.1~3 mass%, 0.1~2 mass%, 0.1~1.5 mass%, 0.3~5 mass%, 0.3~4 mass%, 0.3~3 mass%, 0.3~2 mass%, 0.3~1.5 mass%, 0.5~5 mass%, 0.5~4 mass%, 0.5~3 mass%, 0.5~2 mass%, 0.5~1.5 mass%, 0.7~5 mass%, 0.7~4 mass%, 0.7~3 mass%, 0.7~2 mass%, 0.7~1.5 mass%, 0.9~5 mass%, 0.9~4 mass%, 0.9~3 mass%, 0.9~2 mass% or 0.9~1.5 mass% based on the total mass of the solid content in the positive electrode-forming coating liquid.

The content of the binding material in the positive electrode-forming coating liquid may be, for example, 0.1 mass% or more based on the total mass of the solid content in the positive electrode-forming coating liquid, and may be 0.5 mass% or more, 1 mass% or more, or 1.5 mass% or more from the viewpoint of further reducing the internal resistance and from the viewpoint of more excellent discharge rate characteristics and cycle characteristics. In addition, the content of the binding material in the positive electrode-forming coating liquid may be, for example, 10 mass% or less based on the total mass of the solid content in the positive electrode-forming coating liquid, and may be 9 mass% or less, 8 mass% or less, 7 mass% or less, 6 mass% or less, 5 mass% or less, 4 mass% or less, or 3 mass% or less from the viewpoint of further reducing the internal resistance and from the viewpoint of more excellent discharge rate characteristics and cycle characteristics.

That is, the content of the binding material in the positive electrode-forming coating liquid may be, for example, 0.1~10 mass%, 0.1~9 mass%, 0.1~8 mass%, 0.1~7 mass%, 0.1~6 mass%, 0.1~5 mass%, 0.1~4 mass%, 0.1~3 mass%, 0.5~10 mass%, 0.5~9 mass%, 0.5~8 mass%, 0.5~7 mass%, 0.5~6 mass%, 0.5~5 mass%, 0.5~4 mass%, 0.5~3 mass%, 1~10 mass%, 1~9 mass%, 1~8 mass%, 1~7 mass%, 1~6 mass%, 1~5 mass%, 1~4 mass%, 1~3 mass%, 1.5~10 mass%, 1.5~9 mass%, 1.5~8 mass%, 1.5~7 mass%, 1.5~6 mass%, 1.5~5 mass%, 1.5~4 mass%, or 1.5~3 mass% based on the total mass of the solid content in the positive electrode-forming coating liquid.

The content of the active material in the positive electrode-forming coating liquid may be, for example, 90 mass% or more based on the total mass of the solid content in the positive electrode-forming coating liquid, and may be 92 mass% or more, 94 mass% or more, or 96 mass% or more from the viewpoint of more excellent discharge rate characteristics and cycle characteristics. In addition, the content of the active material in the positive electrode-forming coating liquid may be, for example, 99.5 mass% or less based on the total mass of the solid content in the positive electrode-forming coating liquid, and may be 99 mass% or less or 98 mass% or less from the viewpoint of further reducing the internal resistance.

That is, the content of the active material in the positive electrode-forming coating liquid may be, for example, 90~99.5 mass%, 90~99 mass%, 90~98 mass%, 92~99.5 mass%, 92~99 mass%, 92~98 mass%, 94~99.5 mass%, 94~99 mass%, 94~98 mass%, 96~99.5 mass%, 96~99 mass%, or 96~98 mass% based on the total mass of the solid content in the positive electrode-forming coating liquid.

The content of the dispersant in the positive electrode-forming coating liquid may be, for example, 0.05 mass% or more, 0.1 mass% or more, or 0.15 mass% or more based on the total mass of the solid content in the positive electrode-forming coating liquid. The content of the dispersant in the positive electrode-forming coating liquid may be, for example, 0.8 mass% or less, 0.5 mass% or less, or 0.2 mass% or less, based on the total mass of the solid content in the positive electrode-forming coating liquid.

That is, the content of the dispersant in the positive electrode-forming coating liquid may be, for example, 0.05~0.8 mass%, 0.05~0.5 mass%, 0.05~0.2 mass%, 0.1~0.8 mass%, 0.1~0.5 mass%, 0.1~0.2 mass%, 0.15~0.8 mass%, 0.15~0.5 mass%, or 0.15~0.2 mass% based on the total mass of the solid content in the positive electrode-forming coating liquid.

The solid content concentration of the positive electrode-forming coating liquid may be, for example, 63 mass% or more, and may be 65 mass% or more, 66 mass% or more, or 67 mass% or more from the viewpoint of being able to shorten the time for drying the liquid medium in manufacturing the positive electrode and from the viewpoint of being able to further suppress the migration of the conductive material in drying the liquid medium. The solid content concentration of the positive electrode-forming coating liquid may be, for example, 80 mass% or less, and may be 78 mass% or less, 76 mass% or less, 74 mass% or less, 72 mass% or less, or 70 mass% or less from the viewpoint of making the coating film in manufacturing the positive electrode smoother and from the viewpoint of making the variation in internal resistance of the battery smaller.

That is, the solid content concentration of the positive electrode-forming coating liquid may be, for example, 63~80 mass%, 63~78 mass%, 63~76 mass%, 63~74 mass%, 63~72 mass%, 63~70 mass%, 65~80 mass%, 65~78 mass%, 65~76 mass%, 65~74 mass%, 65~72 mass%, 65~70 mass%, 66~80 mass%, 66~78 mass%, 66~76 mass%, 66~74 mass%, 66~72 mass%, 66~70 mass%, 67~80 mass%, 67~78 mass%, 67~76 mass%, 67~74 mass%, 67~72 mass%, or 67~70 mass%.

<Positive Electrode>

The positive electrode of the present embodiment includes a mixture layer made of a positive electrode composition and a current collector.

The positive electrode composition may be a composition containing the solid content of the positive electrode-forming coating liquid, or may be a composition obtained by removing at least a part of the liquid medium from the positive electrode-forming coating liquid. That is, the positive electrode composition may be a composition containing carbon black, carbon nanotubes, a binding material, and an active material. The positive electrode composition may further contain a dispersant.

The content of the carbon black in the positive electrode composition may be, for example, 5 parts by mass or more with respect to 100 parts by mass of the total of the carbon black and the carbon nanotube, and may be 10 parts by mass or more, 15 parts by mass or more, 20 parts by mass or more, 25 parts by mass or more, 30 parts by mass or more, 35 parts by mass or more, 40 parts by mass or more, 45 parts by mass or more, 50 parts by mass or more, 55 parts by mass or more, 60 parts by mass or more, or 65 parts by mass or more from the viewpoint of further reducing the internal resistance and from the viewpoint of more excellent discharge rate characteristics and cycle characteristics. In addition, the content of the carbon black in the positive electrode composition may be, for example, 99 parts by mass or less with respect to 100 parts by mass of the total of the carbon black and the carbon nanotube, and may be 95 parts by mass or less, 90 parts by mass or less, 85 parts by mass or less, 80 parts by mass or less, or 75 parts by mass or less from the viewpoint of further reducing the internal resistance and from the viewpoint of more excellent discharge rate characteristics and cycle characteristics.

That is, the content of carbon black in the positive electrode composition may be, for example, 5~99 parts by mass, 5~95 parts by mass, 5~90 parts by mass, 5~85 parts by mass, 5~80 parts by mass, 5~75 parts by mass, 10~99 parts by mass, 10~95 parts by mass, 10~90 parts by mass, 10~85 parts by mass, 10~80 parts by mass, 10~75 parts by mass, 15~99 parts by mass, 15~95 parts by mass, 15~90 parts by mass, 15~85 parts by mass, 15~80 parts by mass, 15~75 parts by mass, 20~99 parts by mass, 20~95 parts by mass, 20~90 parts by mass, 20~85 parts by mass, 20~80 parts by mass, 20~75 parts by mass, 25~99 parts by mass, 25~95 parts by mass, 25~90 parts by mass, 25~85 parts by mass, 25~80 parts by mass, 25~75 parts by mass, 30~99 parts by mass, 30~95 parts by mass, 30~90 parts by mass, 30~85 parts by mass, 30~80 parts by mass, 30~75 parts by mass, 35~99 parts by mass, 35~95 parts by mass, 35~90 parts by mass, 35~85 parts by mass, 35~80 parts by mass, 35~75 parts by mass, 40~99 parts by mass, 40~95 parts by mass, 40~90 parts by mass, 40~85 parts by mass, 40~80 parts by mass, 40~75 parts by mass, 45~99 parts by mass, 45~95 parts by mass, 45~90 parts by mass, 45~85 parts by mass, 45~80 parts by mass, 45~75 parts by mass, 50~99 parts by mass, 50~95 parts by mass, 50~90 parts by mass, 50~85 parts by mass, 50~80 parts by mass, 50~75 parts by mass, 55~99 parts by mass, 55~95 parts by mass, 55~90 parts by mass, 55~85 parts by mass, 55~80 parts by mass, 55~75 parts by mass, 60~99 parts by mass, 60~95 parts by mass, 60~90 parts by mass, 60~85 parts by mass, 60~80 parts by mass, 60~75 parts by mass, 65~99 parts by mass, 65~95 parts by mass, 65~90 parts by mass, 65~85 parts by mass, 65~80 parts by mass, 65~75 parts by mass with respect to 100 parts by mass of the total of the carbon black and the carbon nanotube.

The content of the carbon nanotube in the positive electrode composition may be, for example, 1 part by mass or more with respect to 100 parts by mass of the total of the carbon black and the carbon nanotube, and may be 5 parts by mass or more, 10 parts by mass or more, 15 parts by mass or more, 20 parts by mass or more, or 25 parts by mass or more from the viewpoint of further reducing the internal resistance and from the viewpoint of more excellent discharge rate characteristics and cycle characteristics. The content of the carbon nanotube in the positive electrode composition may be, for example, 90 parts by mass or less, 85 parts by mass or less, 80 parts by mass or less, 75 parts by mass or less, 70 parts by mass or less, 65 parts by mass or less, 60 parts by mass or less, 55 parts by mass or less, 50 parts by mass or less, 45 parts by mass or less, 40 parts by mass or more, or 35 parts by mass or less with respect to 100 parts by mass in total of the carbon black and the carbon nanotube.

That is, the content of the carbon nanotube in the positive electrode composition may be, for example, 1~90 parts by mass, 1~85 parts by mass, 1~80 parts by mass, 1~75 parts by mass, 1~70 parts by mass, 1~65 parts by mass, 1~60 parts by mass, 1~55 parts by mass, 1~50 parts by mass, 1~45 parts by mass, 1~40 parts by mass, 1~35 parts by mass, 5~90 parts by mass, 5~85 parts by mass, 5~80 parts by mass, 5~75 parts by mass, 5~70 parts by mass, 5~65 parts by mass, 5~60 parts by mass, 5~55 parts by mass, 5~50 parts by mass, 5~45 parts by mass, 5~40 parts by mass, 5~35 parts by mass, 10~90 parts by mass, 10~85 parts by mass, 10~80 parts by mass, 10~75 parts by mass, 10~70 parts by mass, 10~65 parts by mass, 10~60 parts by mass, 10~55 parts by mass, 10~50 parts by mass, 10~45 parts by mass, 10~40 parts by mass, 10~35 parts by mass, 15~90 parts by mass, 15~85 parts by mass, 15~80 parts by mass, 15~75 parts by mass, 15~70 parts by mass, 15~65 parts by mass, 15~60 parts by mass, 15~55 parts by mass, 15~50 parts by mass, 15~45 parts by mass, 15~40 parts by mass, 15~35 parts by mass, 20~90 parts by mass, 20~85 parts by mass, 20~80 parts by mass, 20~75 parts by mass, 20~70 parts by mass, 20~65 parts by mass, 20~60 parts by mass, 20~55 parts by mass, 20~50 parts by mass, 20~45 parts by mass, 20~40 parts by mass, 20~35 parts by mass, 25~90 parts by mass, 25~85 parts by mass, 25~80 parts by mass, 25~75 parts by mass, 25~70 parts by mass, 25~65 parts by mass, 25~60 parts by mass, 25~55 parts by mass, 25~50 parts by mass, 25~45 parts by mass, 25~40 parts by mass, 25~35 parts by mass with respect to 100 parts by mass in total of the carbon black and the carbon nanotube.

The total content of the carbon nanotube and the carbon black in the positive electrode composition may be, for example, 0.1 mass% or more based on the total mass of the positive electrode composition, and may be 0.3 mass% or more, 0.5 mass% or more, 0.7 mass% or more, or 0.9 mass% or more from the viewpoint of further reducing the internal resistance and from the viewpoint of more excellent discharge rate characteristics and cycle characteristics. In addition, the total content of the carbon nanotube and the carbon black in the positive electrode composition may be, for example, 5% by mass or less based on the total mass of the positive electrode composition, and may be 4% by mass or less, 3% by mass or less, 2% by mass or less, or 1.5% by mass or less from the viewpoint of further reducing the internal resistance and from the viewpoint of more excellent discharge rate characteristics and cycle characteristics.

That is, the total content of the carbon nanotube and the carbon black in the positive electrode composition may be, for example, 0.1~5 mass%, 0.1~4 mass%, 0.1~3 mass%, 0.1~2 mass%, 0.1~1.5 mass%, 0.3~5 mass%, 0.3~4 mass%, 0.3~3 mass%, 0.3~2 mass%, 0.3~1.5 mass%, 0.5~5 mass%, 0.5~4 mass%, 0.5~3 mass%, 0.5~2 mass%, 0.5~1.5 mass%, 0.7~5 mass%, 0.7~4 mass%, 0.7~3 mass%, 0.7~2 mass%, 0.7~1.5 mass%, 0.9~5 mass%, 0.9~4 mass%, 0.9~3 mass%, 0.9~2 mass% or 0.9~1.5 mass% based on the total mass of the positive electrode composition.

The content of the binding material in the positive electrode composition may be, for example, 0.1 mass% or more based on the total mass of the positive electrode composition, and may be 0.5 mass% or more, 1 mass% or more, or 1.5 mass% or more from the viewpoint of further reducing the internal resistance and from the viewpoint of more excellent discharge rate characteristics and cycle characteristics. In addition, the content of the binding material in the positive electrode composition may be, for example, 10 mass% or less based on the total mass of the positive electrode composition, and may be 9 mass% or less, 8 mass% or less, 7 mass% or less, 6 mass% or less, 5 mass% or less, 4 mass% or less, or 3 mass% or less from the viewpoint of further reducing the internal resistance and from the viewpoint of more excellent discharge rate characteristics and cycle characteristics.

That is, the content of the binding material in the positive electrode composition may be, for example, 0.1~10 mass%, 0.1~9 mass%, 0.1~8 mass%, 0.1~7 mass%, 0.1~6 mass%, 0.1~5 mass%, 0.1~4 mass%, 0.1~3 mass%, 0.5~10 mass%, 0.5~9 mass%, 0.5~8 mass%, 0.5~7 mass%, 0.5~6 mass%, 0.5~5 mass%, 0.5~4 mass%, 0.5~3 mass%, 1~10 mass%, 1~9 mass%, 1~8 mass%, 1~7 mass%, 1~6 mass%, 1~5 mass%, 1~4 mass%, 1~3 mass%, 1.5~10 mass%, 1.5~9 mass%, 1.5~8 mass%, 1.5~7 mass%, 1.5~6 mass%, 1.5~5 mass%, 1.5~4 mass%, or 1.5~3 mass% based on the total mass of the positive electrode composition.

The content of the active material in the positive electrode composition may be, for example, 90 mass% or more based on the total mass of the positive electrode composition, and may be 91 mass% or more, 92 mass% or more, 93 mass% or more, 94 mass% or more, or 95 mass% or more from the viewpoint of more excellent discharge rate characteristics and cycle characteristics. In addition, the content of the active material in the positive electrode composition may be, for example, 99.5 mass% or less based on the total mass of the positive electrode composition, and may be 99 mass% or less or 98 mass% or less from the viewpoint of further reducing the internal resistance.

That is, the content of the active material in the positive electrode composition may be, for example, 90~99.5 mass%, 90~99 mass%, 90~98 mass%, 91~99.5 mass%, 91~99 mass%, 91~98 mass%, 92~99.5 mass%, 92~99 mass%, 92~98 mass%, 93~99.5 mass%, 93~99 mass%, 93~98 mass%, 94~99.5 mass%, 94~99 mass%, 94~98 mass%, 95~99.5 mass%, 95~99 mass%, or 95~98 mass% based on the total mass of the positive electrode composition.

The content of the dispersant in the positive electrode composition may be, for example, 0.05 mass% or more, 0.1 mass% or more, or 0.15 mass% or more based on the total mass of the positive electrode composition. The content of the dispersant in the positive electrode composition may be, for example, 0.8 mass% or less, 0.5 mass% or less, or 0.2 mass% or less based on the total mass of the positive electrode composition.

That is, the content of the dispersant in the positive electrode composition may be, for example, 0.05~0.8 mass%, 0.05~0.5 mass%, 0.05~0.2 mass%, 0.1~0.8 mass%, 0.1~0.5 mass%, 0.1~0.2 mass%, 0.15~0.8 mass%, 0.15~0.5 mass%, or 0.15~0.2 mass% based on the total mass of the positive electrode composition.

The positive electrode of the present embodiment may be manufactured by a manufacturing method including a positive electrode forming step of applying the above-described positive electrode-forming coating liquid onto a current collector to form a mixture layer composed of a positive electrode composition on the current collector.

The current collector is not particularly limited, and a known current collector can be used without particular limitation. As the current collector, for example, a metal foil (metals such as gold, silver, copper, platinum, aluminum, iron, nickel, chromium, manganese, lead, tungsten, and titanium, and alloys containing any one of these as a main component) is used. The current collector is generally provided in the form of a foil, but is not limited thereto, and a perforated foil-like or mesh-like current collector can also be used.

The method for applying the positive electrode-forming coating liquid onto the current collector is not particularly limited, and may be, for example, a die coating method, a dip coating method, a roll coating method, a doctor coating method, a knife coating method, a spray coating method, a gravure coating method, a screen printing method, an electrostatic coating method, or the like.

The coating amount of the positive electrode-forming coating liquid is not particularly limited, and may be appropriately adjusted so that the thickness of the mixture layer falls within a desired range.

The mixture layer may be formed by removing at least a part of the liquid medium from the coating film of the positive electrode-forming coating liquid formed on the current collector. The method for removing the liquid medium is not particularly limited, and examples of the method for vaporizing and removing at least a part of the liquid medium by heating and/or pressure reduction include leaving and drying, a blower dryer, a warm air dryer, an infrared heater, and a far infrared heater.

The method for producing a positive electrode of the present embodiment may further include a pressurizing step of pressurizing the mixture layer formed in the positive electrode forming step and the current collector in the laminating direction. The mixture layer and the current collector can be brought into close contact with each other by the pressurizing step.

The pressurization method in the pressurizing step is not particularly limited, and may be, for example, a method such as roll pressing, die pressing, or calender pressing.

The thickness of the mixture layer in the positive electrode is not particularly limited, and may be, for example, 50 $\mu$m or more, and is preferably 55 $\mu$m or more, more preferably 60 $\mu$m or more, and may be 65 $\mu$m or more or 70 $\mu$m or more from the viewpoint of increasing the capacity of the battery. In addition, the thickness of the mixture layer in the positive electrode may be, for example, 150 $\mu$m or less, and is preferably 140 $\mu$m or less, more preferably 130 $\mu$m or less, and may be 120 $\mu$m or less or 110 $\mu$m or less from the viewpoint of further enhancing the discharge rate characteristics.

That is, the thickness of the mixture layer in the positive electrode may be, for example, 50~150 $\mu$m, 50~140 $\mu$m, 50~130 $\mu$m, 50~120 $\mu$m, 50~110 $\mu$m, 55~150 $\mu$m, 55~140 $\mu$m, 55~130 $\mu$m, 55~120 $\mu$m, 55~110 $\mu$m, 60~150 $\mu$m, 60~140 $\mu$m, 60~130 $\mu$m, 60~120 $\mu$m, 60~110 $\mu$m, 65~150 $\mu$m, 65~140 $\mu$m, 65~130 $\mu$m, 65~120 $\mu$m, 65~110 $\mu$m, 70~150 $\mu$m, 70~140 $\mu$m, 70~130 $\mu$m, 70~120 $\mu$m, or 70~110 $\mu$m.

The positive electrode of the present embodiment can be suitably used as a positive electrode of a battery, particularly a secondary battery (lithium ion secondary battery).

<Battery>

The battery (a secondary battery is preferable, and a lithium ion secondary battery is more preferable) of the present embodiment includes a positive electrode manufactured by the above-described manufacturing method. In the battery of the present embodiment, the configuration other than the positive electrode may be the same as that of a known battery. The method for producing a battery in the present embodiment is also not particularly limited, and may be the same method as a conventionally known method for producing a battery except for using the positive electrode manufactured by the above-described manufacturing method.

Since the battery of the present embodiment includes the positive electrode using the carbon black of the present embodiment, internal resistance is small, and discharge rate characteristics and cycle characteristics are excellent.

The battery of the present embodiment may include, for example, a positive electrode, a negative electrode, and a separator.

The separator is not particularly limited, and a separator known as a separator for a lithium ion secondary battery can be used without particular limitation. Examples of the separator include synthetic resins such as polyethylene and polypropylene. The separator is preferably a porous film because it has good electrolytic solution retention.

The battery of the present embodiment may include an electrode group in which a positive electrode and a negative electrode are laminated or wound with a separator interposed therebetween.

In the battery of the present embodiment, the positive electrode, the negative electrode, and the separator may be immersed in an electrolytic solution.

The electrolytic solution is not particularly limited, and may be, for example, a nonaqueous electrolytic solution containing a lithium salt. Examples of the nonaqueous solvent in the nonaqueous electrolytic solution containing a lithium salt include ethylene carbonate, propylene carbonate, diethyl carbonate, dimethyl carbonate, and methylethyl carbonate. Examples of the lithium salt that can be dissolved in the nonaqueous solvent include lithium hexafluorophosphate, lithium borotetrafluoride, and lithium trifluoromethanesulfonate. The battery of the present embodiment may use an ion conductive polymer or the like as an electrolyte.

Similarly to a negative electrode used in a general lithium ion secondary battery, the negative electrode in the battery of the present embodiment may include a negative electrode mixture layer formed by applying a negative electrode mixture containing a negative electrode active material and a binder onto a negative electrode current collector, and a negative electrode current collector.

The application of the battery in the present embodiment is not particularly limited, and for example, the battery can be used in a wide range of fields such as portable AV devices such as a digital camera, a video camera, a portable audio player, and a portable liquid crystal television; portable information terminals such as a notebook personal computer, a smartphone, and a mobile PC; and portable game devices, electric tools, electric bicycles, hybrid cars, electric cars, and power storage systems.

Although the preferred embodiments of the present invention have been described above, the present invention is not limited to the above embodiments.

For example, one aspect of the present invention may be a method for producing a positive electrode-forming coating liquid, a method for producing a positive electrode, or a method for producing a battery, including a selection step of measuring a hydrochloric acid liquid absorption amount of carbon black and selecting the carbon black having a hydrochloric acid liquid absorption amount of 30 mL/5 g or more. That is, the method for producing a positive electrode-forming coating liquid, the method for producing a positive electrode, and the method for producing a battery described above may further include the selection step.

## Examples

Hereinafter, the present invention will be described in more detail with reference to examples, but the present invention is not limited to these examples.

(Production Example A1: Production of Carbon Black (A1))

Carbon black is prepared by supplying acetylene (110°C) as a raw material gas at 20 Nm$^3$/h from a nozzle installed in an upstream part of a cylindrical reaction furnace (diameter: 1 m, length: 7 m) and supplying oxygen (25°C) as a gas other than the raw material at 12 Nm$^3$/h from a nozzle installed in a direction orthogonal to the raw material gas, and the carbon black is collected by a bag filter installed in a downstream part of the reaction furnace. Thereafter, it is passed through a dry cyclone device and an iron removing magnet and collected in a tank. The nozzle diameter is adjusted so that the ejection rate of the raw material gas into the reaction furnace is 5 m/s and the ejection rate of the gas other than the raw material is 8 m/s.

(Production Examples A2~A5: Production of Carbon Black (A2)~(A5))

Carbon black is produced in the same manner as in Production Example A1 except that the supply amount of oxygen (25°C) and the ejection rate are changed as shown in Table 1.

(Production Examples X1~X2: Production of Carbon Blacks (X1)~(X2))

Carbon black is produced in the same manner as in Production Example A1 except that the supply amount of oxygen (25°C) and the ejection rate are changed as shown in Table 1.

[Table 1]

|  | Supply amount of oxygen (Nm$^3$/h) | Ejection rate of oxygen (m/s) |
|---|---|---|
| Production Example A1 | 12 | 8 |
| Production Example A2 | 9.5 | 15 |
| Production Example A3 | 8 | 15 |
| Production Example A4 | 16 | 7 |
| Production Example A5 | 8 | 10 |
| Production Example X1 | 12 | 6 |
| Production Example X2 | 12 | 4 |

The following measurement is performed on the carbon blacks obtained in Production Examples A1~A5 and X1~X2. The results are shown in Table 2.

(1) Specific Surface Area

The thermal conductivity is measured according to Method A flow method (thermal conductivity measurement method) of JIS K6217-2:2017.

(2) DBP Absorption Amount

The DBP absorption amount is a value obtained by converting a value measured by a method described in Method B of JIS K6221 into a value corresponding to JIS K6217-4:2008 according to the following Formula (a).

$$\text{DBP absorption amount} = (A - 10.974)/0.7833 \quad ... \quad (a)$$

[In the formula, A represents a value of a DBP absorption amount measured by a method described in Method B of JIS K6221.]

(3) Hydrochloric acid liquid absorption amount: measured according to JIS K1469:2003.

[Table 2]

|  | Specific surface area (m$^2$/g) | DBP absorption amount (mL/100 g) | Hydrochloric acid liquid absorption amount (mL/5 g) |
|---|---|---|---|
| Production Example A1 | 242 | 208 | 38.7 |
| Production Example A2 | 178 | 198 | 35.2 |
| Production Example A3 | 154 | 184 | 30.9 |
| Production Example A4 | 376 | 260 | 44.6 |
| Production Example A5 | 153 | 185 | 31.3 |
| Production Example X1 | 175 | 180 | 29.6 |
| Production Example X2 | 160 | 161 | 28.5 |

(Example 1)

<Production of Positive Electrode-Forming Coating Liquid>

Carbon black (A1) of Production Example A1, N-methyl-2-pyrrolidone (manufactured by Kanto Chemical Co., Inc.) as a dispersion medium, and polyvinyl alcohol (Poval B05 manufactured by Denka Company Limited) as a dispersant are prepared. 10 parts by mass of carbon black (A1) and 1 part by mass of polyvinyl alcohol were added to 89 parts by mass of NMP, and the mixture was stirred for 120 minutes with a planetary mixer (manufactured by PRIMIX Corporation, HIVIS DISPER MIX 3D-5 type) to obtain a slurry (first agent).

Next, carbon nanotubes ("Flotube 6000" manufactured by CNano) having an average diameter of 6 nm, a BET specific surface area of 300 $m^2$/g, and an average diameter/BET specific surface area of 0.02 are prepared. 1.0 mass% of polyvinylpyrrolidone ("PITZCOL K-90" manufactured by DKS Co. Ltd.) and 4.0 mass% of carbon nanotubes are added to 95.0 mass% of NMP, and the mixture is stirred for 120 minutes with a planetary mixer (manufactured by PRIMIX Corporation, HIVIS DISPER MIX 3D-5 type) to prepare a slurry containing carbon nanotubes. The obtained slurry is charged into a bead mill (Mugenflow MGF2-ZA manufactured by Ashizawa Finetech Ltd.) equipped with zirconia beads (diameter: 0.5 mm), and subjected to a dispersion treatment. After the dispersion treatment, the zirconia beads are removed by filtration to obtain a slurry (second agent).

Next, an NMP solution ("L#7208" manufactured by Kureha Corporation, third agent) of polyvinylidene fluoride as a binding material, lithium nickel-manganese-cobaltate ("ME6E" manufactured by Beijing Tosho Co., Ltd.) having an average particle size $D_{50}$ of 10 $\mu$m as an active material, and NMP as a dispersion medium are prepared. The first agent, the second agent, the third agent, and the active material are mixed so that the active material is 97.0 mass%, the carbon black is 0.7 mass%, the carbon nanotube is 0.3 mass%, and the binding material is 2.0 mass% on the basis of the total solid content, NMP is added until the viscosity reaches a coatable viscosity, and mixing is performed until the mixture becomes uniform using a rotation and revolution type mixer (Awatori Rentaro ARV-310 manufactured by Thinky Corporation) to obtain a positive electrode-forming coating liquid.

<Production of Positive Electrode>

The positive electrode-forming coating liquid is applied onto one surface of an aluminum foil (manufactured by UACJ) having a thickness of 15 $\mu$m by an applicator, left standing in a dryer, and preliminarily dried at 105°C for 1 hour to completely remove NMP, thereby forming a mixture layer. Next, a linear pressure of 200 kg/cm is applied with a roll press machine to prepare the laminate such that the thickness of the entire laminate becomes 80 $\mu$m. Subsequently, vacuum drying is performed at 170°C for 3 hours to completely remove residual moisture, thereby obtaining a positive electrode including a current collector and a mixture layer.

<Production of Negative Electrode>

Pure water (manufactured by Kanto Chemical Co., Inc.) is prepared as a solvent, artificial graphite ("MAG-D" manufactured by Hitachi Chemical Co., Ltd.) is prepared as a negative electrode active material, styrene butadiene rubber ("BM-400B" manufactured by Zeon Corporation, hereinafter referred to as SBR) is prepared as a binding material, and carboxymethyl cellulose ("D2200" manufactured by Daicel Corporation, hereinafter referred to as CMC) is prepared as a dispersant.

Next, 1 part by mass of CMC and 97 parts by mass of artificial graphite are weighed and mixed, pure water is added to this mixture, and the mixture is mixed until it becomes uniform using a rotating and revolving mixer (Awatori Rentaro ARV-310 manufactured by Thinky Corporation) to obtain a mixture. Next, 2 parts by mass of SBR is weighed, added to the obtained mixture, and mixed until the mixture becomes uniform using a planetary centrifugal mixer (Awatori Rentaro ARV-310 manufactured by Thinky Corporation) to obtain a negative electrode-forming coating liquid. Next, the negative electrode-forming coating liquid is applied onto a copper foil (manufactured by UACJ) having a thickness of 10 $\mu$m by an applicator, left standing in a dryer, and preliminarily dried at 60°C for 1 hour. Next, a linear pressure of 50 kg/cm is applied with a roll press machine to prepare the laminate such that the thickness of the entire laminate becomes 60 $\mu$m. Subsequently, vacuum drying is performed at 120°C for 3 hours to completely remove residual moisture, thereby obtaining a negative electrode including a current collector and a mixture layer.

(Production of Battery)

In a dry room controlled at a dew point of -50°C or lower, the produced positive electrode is processed to 40 $\times$ 40 mm, and the produced negative electrode is processed to 44 $\times$ 44 mm, and then an aluminum tab is welded to the positive electrode, and a nickel tab is welded to the negative electrode. A polyolefin microporous membrane processed to 45 $\times$ 45 mm is disposed between the positive electrode and the negative electrode such that the mixture layer surfaces of the positive electrode and the negative electrode faced each other at the center. Next, the sheet-like exterior cut and processed into a 70 $\times$ 140 mm square is folded in two at the center of the long side. Then, while the exterior is disposed so that the aluminum tab for the positive electrode and the aluminum tab for the negative electrode are exposed to the outside of the exterior, the laminate of the positive electrode/polyolefin microporous film/negative electrode is sandwiched by the exterior folded in two. Next, two sides including the side where the aluminum tab for the positive electrode and the nickel tab for the negative electrode are exposed are heat-sealed using a heat sealer, and then 2 g of an electrolytic solution (solution containing ethylene carbonate/diethyl carbonate = 1/2 (volume ratio) and 1M $LiPF_6$ solution manufactured by Kishida Chemical Co., Ltd.) is injected from one side where the tabs are not heat-sealed, so that the electrolytic solution is sufficiently impregnated into the positive electrode, the negative electrode, and the polyolefin microporous membrane, and then the remaining one side of the exterior is heat-sealed while the inside is decompressed by a vacuum heat sealer, thereby obtaining a lithium ion secondary battery.

(Evaluation of Battery)

[Internal Resistance]

The prepared battery is charged at a constant current and a constant voltage limited to 4.3 V and 0.2 C at 25°C, and then discharged to 3.0 V at a constant current of 0.2 C. Next, the battery is charged/discharged for 5 cycles under the same conditions, and then charged so that the charge depth is 50%. Thereafter, impedance measurement is performed in a frequency range of 10 MHz~0.001 Hz and a vibration voltage of 5 mV to measure internal resistance. The results are shown in Table 3.

[Discharge Rate Characteristics (Rate Capacity Retention Rate)]

The prepared battery is charged at a constant current and a constant voltage limited to 4.3 V and 0.2 C at 25°C, and then discharged to 3.0 V at a constant current of 0.2 C. Next, the battery is recovered and charged again at a constant current and constant voltage limited to 4.3 V and 0.2 C, and then discharged to 3.0 V at a constant current of 0.2 C, and the discharge capacity at this time is measured. Next, as conditions of recovery charge, charge is performed with a constant current/constant voltage limited to 4.3 V and 0.2 C, and on the other hand, while the discharge current is changed stepwise to 0.5 C, 1 C, 2 C, and 3 C, recovery charge and discharge are repeated, and the discharge capacity for each discharge current is measured. As an index of the discharge rate characteristics of the battery, the capacity retention rate during 3 C discharge with respect to 0.2 C discharge is calculated as a rate capacity retention rate. The results are shown in Table 3.

[Cycle Characteristics (Cycle Capacity Retention Ratio)]

The prepared battery is charged at a constant current and a constant voltage limited to 4.3 V and 1 C at 25°C, and then discharged to 3.0 V at a constant current of 1 C. The charge and discharge are repeated 500 cycles, and the discharge capacity in each cycle is measured. As an index of the cycle characteristics of the battery, the capacity retention ratio after 500 cycles with respect to the capacity retention ratio after 1 cycle is calculated as a cycle capacity retention ratio. The results are shown in Table 3.

<Example 2>

A battery is produced in the same manner as in Example 1 except that the carbon black (A1) of Example 1 is changed to carbon black (A2), and the battery is evaluated.

<Example 3>

A battery is produced in the same manner as in Example 1 except that the carbon nanotube of Example 1 is changed to a carbon nanotube ("Flotube 7000" manufactured by CNano) having an average diameter of 9 nm, a BET specific surface area of 250 $m^2$/g, and an average diameter/BET specific surface area of 0.036, and the battery is evaluated.

<Example 4>

A battery is produced in the same manner as in Example 1 except that the carbon black (A1) of Example 1 is changed to carbon black (A5), and the battery is evaluated.

<Example 5>

A battery is produced in the same manner as in Example 1 except that the carbon black (A1) of Example 1 is changed to carbon black (A3), and the battery is evaluated.

<Example 6>

A battery is produced in the same manner as in Example 1 except that the carbon nanotube of Example 1 is changed to a carbon nanotube ("Flotube 9000" manufactured by CNano) having an average diameter of 12 nm, a BET specific surface area of 180 $m^2/g$, and an average diameter/BET specific surface area of 0.067, and the battery is evaluated.

<Example 7>

A battery is produced and evaluated by the same method as in Example 1 except that the amounts of the first agent and the second agent are changed such that the content of carbon black in the positive electrode-forming coating liquid is 0.5 mass% based on the total mass of the solid content, and the content of carbon nanotubes in the positive electrode-forming coating liquid is 0.5 mass% based on the total mass of the solid content.

<Example 8>

A battery is produced and evaluated by the same method as in Example 1 except that the amounts of the first agent and the second agent are changed such that the content of carbon black in the positive electrode-forming coating liquid is 0.9 mass% based on the total mass of the solid content, and the content of carbon nanotubes in the positive electrode-forming coating liquid is 0.1 mass% based on the total mass of the solid content.

<Example 9>

A battery is produced in the same manner as in Example 1 except that the carbon black (A1) of Example 1 is changed to carbon black (A4), and the battery is evaluated.

<Example 10>

A battery is produced and evaluated by the same method as in Example 1 except that the active material of Example 1 is changed to lithium cobaltate ("KD-20" manufactured by Umicore Corporation) having an average particle size $D_{50}$ of 20 $\mu$m, and the amounts of the first agent and the second agent are changed so that the content of carbon black in the positive electrode-forming coating liquid is 0.9 mass% with respect to the total mass of the solid content, and the content of carbon nanotubes in the positive electrode-forming coating liquid is 0.1 mass% with respect to the total mass of the solid content.

<Example 11>

A battery is produced and evaluated by the same method as in Example 1 except that the carbon black (A1) in Example 1 is changed to carbon black (A2), the carbon nanotubes are changed to carbon nanotubes having an average diameter of 9 nm, a BET specific surface area of 250 $m^2/g$, and an average diameter/BET specific surface area of 0.036 ("Flotube 7000" manufactured by CNano), and the amounts of the first agent and the second agent are changed so that the content of the carbon black in the positive electrode-forming coating liquid is 0.1 mass% based on the total mass of the solid content and the content of the carbon nanotubes in the positive electrode-forming coating liquid is 0.9 mass% based on the total mass of the solid content.

<Comparative Example 1>

A battery is produced and evaluated by the same method as in Example 1 except that the carbon black (A1) of Example 1 is changed to carbon black (A3), carbon nanotubes are not used, and the amount of the first agent is changed so that the content of the carbon black in the positive electrode-forming coating liquid is 1% by mass based on the total mass of solid contents.

<Comparative Example 2>

A battery is produced and evaluated by the same method as in Example 1 except that the carbon nanotube of Example 1 is changed to a carbon nanotube ("Flotube 7000" manufactured by CNano) having an average diameter of 9 nm, a BET specific surface area of 250 $m^2/g$, and an average diameter/BET specific surface area of 0.036, carbon black is not used, and the amount of the second agent is changed so that the content of the carbon nanotube in the positive electrode-forming coating liquid is 1% by mass based on the total mass of the solid content.

<Comparative Example 3>

A battery is produced in the same manner as in Example 1 except that the carbon nanotube of Example 1 is changed to a carbon nanotube ("MWNT" manufactured by Tokyo Chemical Industry Co., Ltd.) having an average diameter of 32 nm, a BET specific surface area of 110 $m^2$/g, and an average diameter/BET specific surface area of 0.29, and the battery is evaluated.

<Comparative Example 4>

A battery is produced and evaluated by the same method as in Example 1 except that the carbon nanotubes in Example 1 are changed to carbon nanotubes having an average diameter of 2.5 nm, a BET specific surface area of 740 $m^2$/g, and an average diameter/BET specific surface area of 0.003 ("Signis FW100" manufactured by Sigma-Aldrich Co. LLC.), and the amounts of the first agent and the second agent are changed so that the content of the carbon black in the positive electrode-forming coating liquid is 0.9 mass% based on the total mass of the solid content and the content of the carbon nanotubes in the positive electrode-forming coating liquid is 0.1 mass% based on the total mass of the solid content.

<Comparative Example 5>

A battery is produced in the same manner as in Example 1 except that the carbon black (A1) of Example 1 is changed to carbon black (X1), and the battery is evaluated.

<Comparative Example 6>

A battery is produced in the same manner as in Example 1 except that the carbon black (A1) of Example 1 is changed to carbon black (X2), and the battery is evaluated.

[Table 3]

|  | CB | | CNT | Internal resistance ($\Omega$) | Rate capacity retention rate (%) | Cycle capacity retention ratio (%) |
|---|---|---|---|---|---|---|
|  | Type | Hydrochloric acid liquid absorption amount (mL/5 g) | Average diameter (nm) |  |  |  |
| Example 1 | A1 | 38.7 | 6 | 1.48 | 96.4 | 93.2 |
| Example 2 | A2 | 35.2 | 6 | 1.59 | 91.4 | 90.1 |
| Example 3 | A1 | 38.7 | 9 | 1.51 | 95.8 | 92.1 |
| Example 4 | A5 | 31.3 | 6 | 1.64 | 88.2 | 87.2 |
| Example 5 | A3 | 30.9 | 6 | 1.63 | 88.1 | 88.4 |
| Example 6 | A1 | 38.7 | 12 | 1.61 | 90.5 | 89.5 |
| Example 7 | A1 | 38.7 | 6 | 1.52 | 95.1 | 92.4 |
| Example 8 | A1 | 38.7 | 6 | 1.53 | 94.9 | 92.1 |
| Example 9 | A4 | 44.6 | 6 | 1.46 | 96.5 | 92.3 |
| Example 10 | A1 | 38.7 | 6 | 1.68 | 91.5 | 92.2 |
| Example 11 | A2 | 35.2 | 9 | 1.67 | 87.8 | 86.9 |
| Comparative Example 1 | A3 | 30.9 | - | 1.84 | 79.8 | 80.2 |
| Comparative Example 2 | - | - | 9 | 1.82 | 80.1 | 84.9 |
| Comparative Example 3 | A1 | 38.7 | 32 | 1.98 | 74.2 | 76.3 |
| Comparative Example 4 | A1 | 38.7 | 2.5 | 1.95 | 78.3 | 76.2 |
| Comparative Example 5 | X1 | 29.6 | 6 | 1.71 | 85.2 | 84.7 |

(continued)

| | | CB | CNT | Internal resistance ($\Omega$) | Rate capacity retention rate (%) | Cycle capacity retention ratio (%) |
|---|---|---|---|---|---|---|
| | Type | Hydrochloric acid liquid absorption amount (mL/5 g) | Average diameter (nm) | | | |
| Comparative Example 6 | X2 | 28.5 | 6 | 1.86 | 82.1 | 80.9 |

**Claims**

1. A positive electrode composition containing: carbon black; a carbon nanotube; a binding material; and an active material, wherein

   the carbon black has a hydrochloric acid liquid absorption amount of 30 mL/5 g or more, and
   the carbon nanotube has an average diameter of 5 to 15 nm.

2. The positive electrode composition according to claim 1, wherein a ratio of the average diameter to a BET specific surface area of the carbon nanotube (average diameter/BET specific surface area) is 0.01~0.1 nm/(m$^2$/g).

3. A positive electrode comprising: a mixture layer formed of the positive electrode composition according to claim 1 or 2.

4. A battery comprising: the positive electrode according to claim 3.

5. A method for producing a positive electrode-forming coating liquid, the method comprising:

   a mixing step of mixing carbon black and a first liquid medium to obtain a first agent containing the carbon black and the first liquid medium; and
   a coating liquid forming step of mixing the first agent, a second agent containing a carbon nanotube and a second liquid medium, a third agent containing a binding material and a third liquid medium, and an active material to form a positive electrode-forming coating liquid, wherein
   the carbon black has a hydrochloric acid liquid absorption amount of 30 mL/5 g or more, and
   the carbon nanotube has an average diameter of 5 to 15 nm.

6. A method for producing a positive electrode, the method comprising: a positive electrode forming step of applying a positive electrode-forming coating liquid produced by the method according to claim 5 onto a current collector to form a mixture layer composed of a positive electrode composition containing the carbon black, the carbon nanotube, the binding material and the active material on the current collector, thereby obtaining a positive electrode including the current collector and the mixture layer.

7. A method for producing a battery, the method comprising: a positive electrode forming step of applying a positive electrode-forming coating liquid produced by the method according to claim 5 onto a current collector to form a mixture layer composed of a positive electrode composition containing the carbon black, the carbon nanotube, the binding material and the active material on the current collector, thereby obtaining a positive electrode including the current collector and the mixture layer.

## INTERNATIONAL SEARCH REPORT

International application No.

**PCT/JP2023/012966**

### A. CLASSIFICATION OF SUBJECT MATTER

*H01M 4/62*(2006.01)i; *H01M 4/02*(2006.01)i; *H01M 4/04*(2006.01)i; *H01M 4/13*(2010.01)i; *H01M 4/139*(2010.01)i
FI:  H01M4/62 Z; H01M4/04 Z; H01M4/02 Z; H01M4/13; H01M4/139

According to International Patent Classification (IPC) or to both national classification and IPC

### B. FIELDS SEARCHED

Minimum documentation searched (classification system followed by classification symbols)

H01M4/62; H01M4/02; H01M4/04; H01M4/13; H01M4/139

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/111201 A1 (DENKA CO., LTD.) 04 June 2020 (2020-06-04) examples, claims | 1-4 |
| Y | | 5-7 |
| X | WO 2019/216275 A1 (DENKA CO., LTD.) 14 November 2019 (2019-11-14) examples, claims | 1-4 |
| Y | | 5-7 |
| Y | WO 2018/061622 A1 (ZEON CORP.) 05 April 2018 (2018-04-05) examples, claims | 5-7 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 June 2023** | **27 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2023/012966**

| Patent document cited in search report | Publication date (day/month/year) | Patent family member(s) | Publication date (day/month/year) |
|---|---|---|---|
| WO 2020/111201 A1 | 04 June 2020 | US 2022/0013777 A1 examples, claims<br>EP 3890062 A1<br>CN 113169310 A<br>KR 10-2021-0094055 A | |
| WO 2019/216275 A1 | 14 November 2019 | US 2021/0119206 A1 examples, claims<br>EP 3767709 A1<br>CN 112106233 A<br>KR 10-2021-0006377 A | |
| WO 2018/061622 A1 | 05 April 2018 | US 2019/0190008 A1 examples, claims<br>EP 3522273 A1<br>CN 109690844 A<br>KR 10-2019-0055801 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008227481 A